# EUROPÄISCHE PATENTSCHRIFT

(11) **EP 2 454 502 B1**
(45) Veröffentlichungstag und Bekanntmachung des Hinweises auf die Patenterteilung: **11.09.2013**
(21) Anmeldenummer: 10732967.4
(22) Anmeldetag: 14.07.2010
(51) Int. Cl.: F16D 65/56, F16D 65/14

(54) **PNEUMATISCH ODER ELEKTROMECHANISCH BETÄTIGBARE SCHEIBENBREMSE**
PNEUMATICALLY OR ELECTROMECHANICALLY ACTUATABLE DISK BRAKE
FREIN À DISQUE À COMMANDE PNEUMATIQUE OU ÉLECTROMÉCANIQUE

(30) Priorität: 16.07.2009 DE 102009033394
(43) Veröffentlichungstag der Anmeldung: 23.05.2012
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); KLINGNER, Matthias, 82272 Moorenweis (DE); TRIMPE, Robert, 82234 Weßling (DE)
(74) Vertreter: Mattusch, Gundula
(86) Internationale Anmeldenummer: PCT/EP2010/060140
(87) Internationale Veröffentlichungsnummer: WO 2011/006928

(56) Entgegenhaltungen:
- WO-A1-2006/024511
- WO-A1-2006/111136
- US-A- 3 592 299
- US-A1- 2004 149 527

## Beschreibung

Die Erfindung betrifft eine pneumatisch oder elektromechanisch betätigbare Scheibenbremse nach dem Oberbegriff des Anspruchs 1.

Eine solche Scheibenbremse ist aus der nicht vorveröffentlichten DE 10 2008 036 765 bekannt.

Um eine stets geforderte Bauteilminimierung zu erreichen, ist in dieser Anmeldung vorgeschlagen, die Nachstelleinrichtung zwischen den Stellspindeln anzuordnen und diese über ein zentrales Antriebselemente der Nachstelleinrichtung unter Zwischenschaltung eines Getriebes mit den Stellspindeln in Wirkverbindung zu bringen. Hierdurch kann auf Transmissionsmittel zur synchronen Verstellung der Stellspindeln verzichtet werden, insbesondere können den Bauraum beanspruchende Funktionsteile außerhalb des Überdeckungsbereiches des Bremshebels im Bremssattel angeordnet werden, während die Antriebsspindel durch den Bremssattel nach außen geführt sind.

Dadurch wird nicht nur der Bremssattel räumlich, sondern auch hinsichtlich des Gewichts reduziert, was ebenso eine gestellte Forderung befriedigt. Diese Gewichtsreduzierung führt im Übrigen zu einer Verringerung des Kraftstoff-verbrauchs des Fahrzeuges, was sowohl betriebswirtschaftlich wie auch hinsichtlich einer Verringerung der Umweltbelastung einen erheblichen Vorteil gegenüber den bis dahin eingesetzten Scheibenbremsen darstellt.

U.a. weist die Nachstelleinrichtung eine Kugelrampenkupplung auf, die gemeinsam mit einer Kugelkonuskupplung eine Lastschaltkupplung bildet, durch die eine Überlastung der Nachstelleinrichtung bei einem Bremsvorgang, d.h. bei Betätigung des Bremshebels, verhindert wird, so dass die Funktionsfähigkeit der Nachstelleinrichtung dauerhaft gewährleistet ist. Hinsichtlich der Funktionsweise der Nachstelleinrichtung wird auf die genannte, nicht vorveröffentlichte DE 10 2008 036 765 verwiesen.

Um ein schnelles Ansprechverhalten der Kugelrampenkupplung zu erhalten, ist eine Drehfeder vorgesehen, die einerseits an eine in das Antriebselement der Nachstelleinrichtung eingreifende Abtriebsscheibe und andererseits an einen Kupplungsring, beides Bestandteile der Kugelrampenkupplung, angeschlossen ist.

Dabei ist die Drehfeder bislang als Schraubenfeder ausgebildet, d.h., sie ist sowohl im Durchmesser wie auch in der Bauhöhe relativ groß.

Der Durchmesser der Drehfeder bestimmt u.a. die Größe von Einbauöffnungen im Bremssattel mit, deren Abmaß wiederum Einfluss auf die Steifigkeit des Bremssattels hat.

Da der Bremssattel ein hoch belastetes Bauteil ist, ist eine Minimierung von Öffnungen stetes Ziel der konstruktiven Überlegungen bei der Gestaltung einer Scheibenbremse. Insofern ist die bekannte Scheibenbremse optimierungsbedürftig.

Der Erfindung liegt die Aufgabe zugrunde, eine Scheibenbremse der gattungsgemäßen Art so weiterzuentwickeln, dass ihre Funktionssicherheit verbessert und ihre Dimensionierung optimiert wird.

Diese Aufgabe wird durch eine Scheibenbremse mit den Merkmalen des Anspruchs 1 gelöst.

Erfindungsgemäß wird nun statt einer Schraubenfeder eine Spiralfeder als Drehfeder eingesetzt, wobei sie vorzugsweise aus einem Federblech gewickelt ist mit an den Enden geformten Haken bzw. Abwinkelungen, zur Befestigung am Kupplungsring einerseits und an der Abtriebsscheibe andererseits. Dabei bildet die Abtriebsscheibe, die außenseitig eine Kulissen-Verzahnung trägt, die mit einem die Stellspindeln betätigenden Getriebe korrespondiert, quasi eine Aufnahme für die Spiralfeder, in die der Kupplungsring eingetaucht ist.

Die aus Federblech gewundene Spiralfeder ist in ihrer Breite so dimensioniert, dass ein Verklemmen in einem maximal gebildeten Spalt zwischen dem Kupplungsring und der Abtriebsscheibe ausgeschlossen ist. Dieser Spalt entsteht bei einer Betätigung der Kugelrampenkupplung, bei der durch eine Relativverdrehung des Kupplungsringes zur Abtriebsscheibe eine axiale Spreizung zwischen beiden Bauteilen erfolgt, unter Bildung des genannten Spaltes.

Prinzipiell denkbar ist jedoch auch die Herstellung der Spiralfeder aus einem Federdraht, wobei diese Spiralfeder eine gegenüber einer bisher eingesetzten Schraubenfeder wesentlich geringere Bauhöhe aufweist, ebenso wie eine Spiralfeder aus gewundenem Federblech. Diese geringe Bauhöhe erlaubt eine kompaktere Bauhöhe der Nachstelleinrichtung.

Aber auch der Durchmesser der Spiralfeder kann gegenüber einer Schraubenfeder verkleinert sein, vor allem dann, wenn bei der aus Federblech hergestellten Ausführungsvariante die einzelnen Windungen direkt aneinander liegen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Scheibenbremse in einer geschnittenen schematischen Draufsicht
- Figur 2: einen Teil einer Nachstelleinrichtung der Scheibenbremse in einer perspektivischen Ansicht
- Figur 3: die Nachstelleinrichtung nach Figur 2 in einem Längsschnitt
- Figur 4: einen Schnitt durch die Nachstelleinrichtung gemäß der Linie IV-IV in Figur 3
- Figur 5: eine Einzelheit der Nachstelleinrichtung in einer perspektivischen Ansicht
- Figur 6: ein weiteres Ausführungsbeispiel einer Nachstelleinrichtung der Scheibenbremse in einer perspektivischen Ansicht
- Figur 7: eine Einzelheit der Nachstelleinrichtung nach Figur 6 gleichfalls schaubildlich dargestellt.

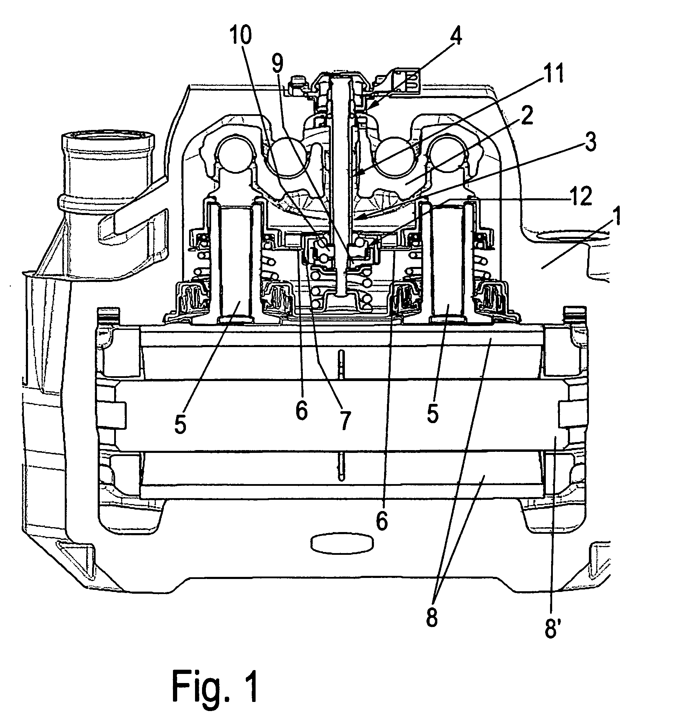

In der Figur 1 ist eine pneumatisch oder elektromechanisch betätigbare Scheibenbremse, insbesondere für ein Nutzfahrzeug dargestellt, mit einem Bremssattel 1, einer darin angeordneten, einen Bremshebel 2 aufweisenden Zuspanneinrichtung zum Andrücken von Bremsbelägen 8 an eine Bremsscheibe 8', wobei zwei parallel und abständig zueinander angeordnete Stellspindeln 5 mittels des Bremshebels 2 unter axialer Verstellung gegen den zugeordneten Bremsbelag 8 drückbar sind.

Im Bremssattel 1 ist eine durch den Bremshebel 2 betätigbare Nachstelleinrichtung 3 angeordnet, mit der über eine axiale Verstellung der Stellspindeln 5 eine verschleißbedingte Änderung eines Lüftspiels zwischen dem Bremsbelag 8 und der Bremsscheibe 8' im Wesentlichen ausgleichbar ist.

Die Nachstelleinrichtung 3 ist zwischen den Stellspindeln 5 angeordnet und steht mit diesen über ein Getriebe in Wirkverbindung.

Dieses Getriebe besteht aus einem zentralen Antriebselement 7 in Form eines Zahnrades, das verdrehsicher mit einer Antriebsspindel 11 verbunden ist und das mit zwei ebenfalls als Zahnräder ausgebildeten Getrieberädern 6 korrespondiert, die jeweils an den Stellspindeln 5 verdrehsicher befestigt sind.

Bei einer Betätigung der Bremse führt der Bremshebel 2 eine Schwenkbewegung aus, die über eine Antriebseinrichtung 4 in die Nachstelleinrichtung 3 geleitet und auf die Antriebsspindel 11 übertragen wird.

Als Bestandteil einer Lastschaltkupplung zwischen der Antriebsspindel 11 und dem Antriebselement 7 ist eine Kugelrampenkupplung 12 vorgesehen, die einen Kupplungsring 10 und eine Abtriebsscheibe 9 aufweist, die drehwinkelbegrenzt drehbar in dem Antriebselement 7 gelagert ist.

Zur Funktion sind der Kupplungsring 10 und die Abtriebsscheibe 9 gegeneinander verdrehbar, unter gleichzeitiger axialer Abstandsveränderung zueinander, wobei die Abtriebsscheibe 9 gegen eine konzentrisch, sich im Bremssattel 1 abstützende Druckfeder 17 gedrückt wird.

Durch die geometrische Formgebung von Rampen, die auf den einander zugewandten Seiten des Kupplungsringes 10 und der Abtriebsscheibe 9 vorgesehen sind und auf denen unter axialer Aufspreizung des Kupplungsringes 10 und der Abtriebsscheibe 9 Kugeln laufen, in Kombination mit einer als Drehfeder fungierenden Spiralfeder 13 ist eine aufzubringende Schaltkraft genau definierbar.

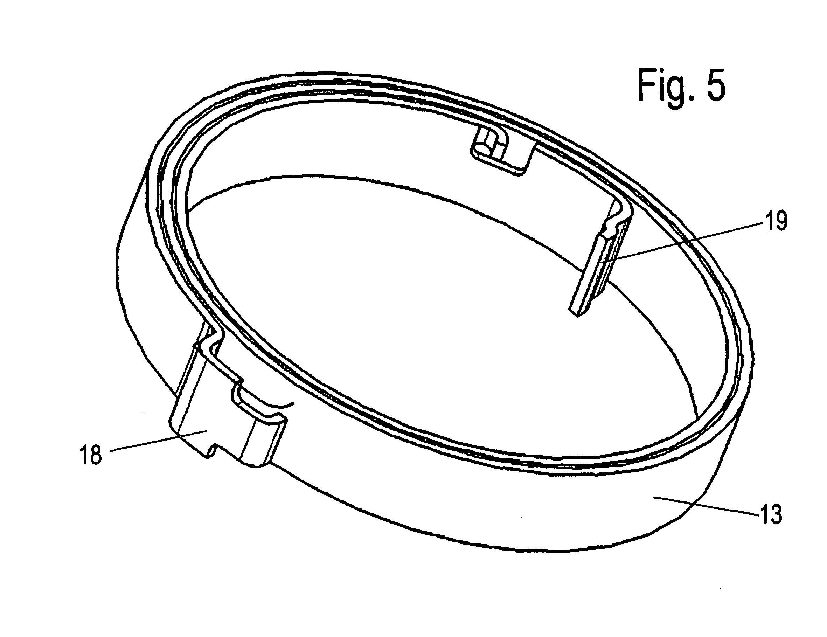

Dabei greift die in der Figur 5 als Einzelheit dargestellte Spiralfeder 13 einerseits formschlüssig in den Kupplungsring 10 und andererseits formschlüssig in die Abtriebsscheibe 9 ein, so dass bei Anlage der Kugeln an einem gebildeten Anschlag im Endbereich der Rampen eine bestimmte Vorspannkraft einstellbar ist.

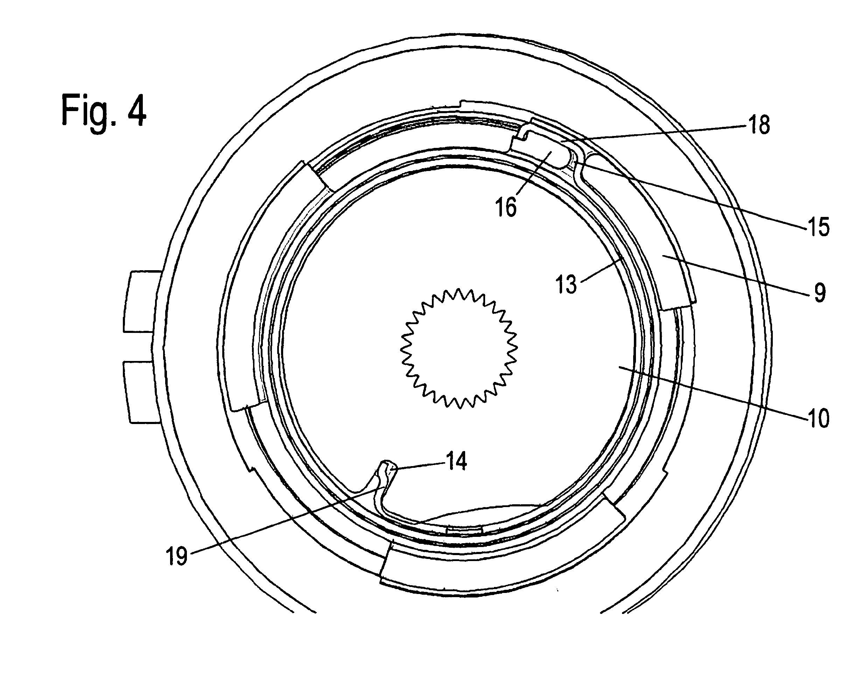

Wie die Figur 4 sehr deutlich zeigt, ist die Spiralfeder 13 an ihrem in die Abtriebsscheibe 9 eingreifenden Endbereich als Haken 18 ausgebildet, der eine Nase 16 hintergreift und durch einen Schlitz 15 hin zur Nase 16 geführt ist.

Der Kupplungsring 10 ist mit einer von außen her offenen, sich radial erstreckenden Ausnehmung 14 versehen, in die der andere, innere und abgewinkelte Endbereich 19 der Spiralfeder 13 eingreift.

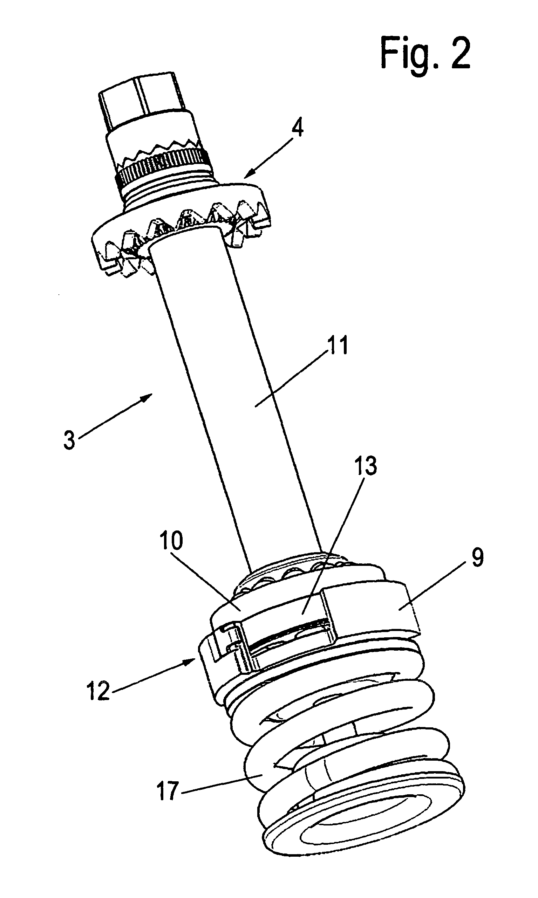

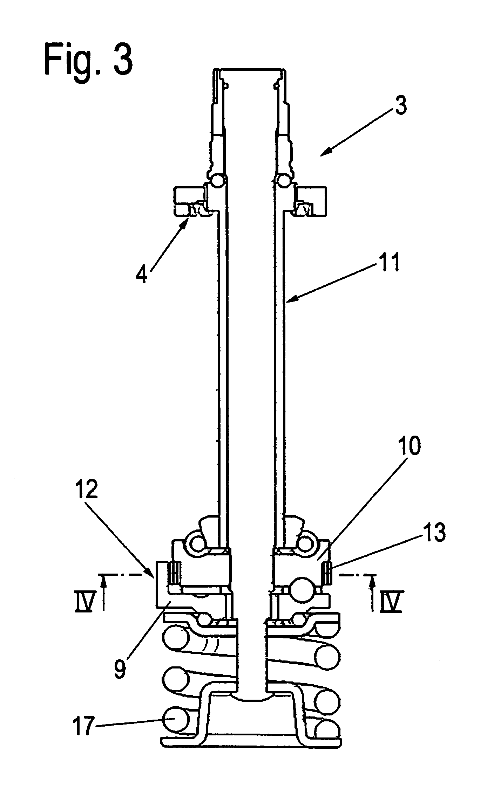

Wie vor allem in den Figuren 2 und 3 ersichtlich, ist der Kupplungsring 10 teilweise in die Abtriebsscheibe 9 eingetaucht, wobei zwischen den einander zugewandten Wandungen des Kupplungsringes 10 und der Abtriebsscheibe 9 die Spiralfeder 13, die im Beispiel aus einem Federblech gewunden ist, positioniert ist. Durch eine Anlage der Windungen der Spiralfeder 13 wird nur ein geringer Platz benötigt und zwar sowohl in radialer wie auch in axialer Richtung. Somit kann die gesamte Nachstelleinrichtung 3 äußerst kompakt konzipiert werden. Im Übrigen ist die Montage der Kugelrampenkupplung lediglich durch einfaches Zusammenstecken möglich, so dass auf eine zusätzliche Bearbeitung verzichtet werden kann, was naturgemäß eine Kostenverringerung zur Folge hat.

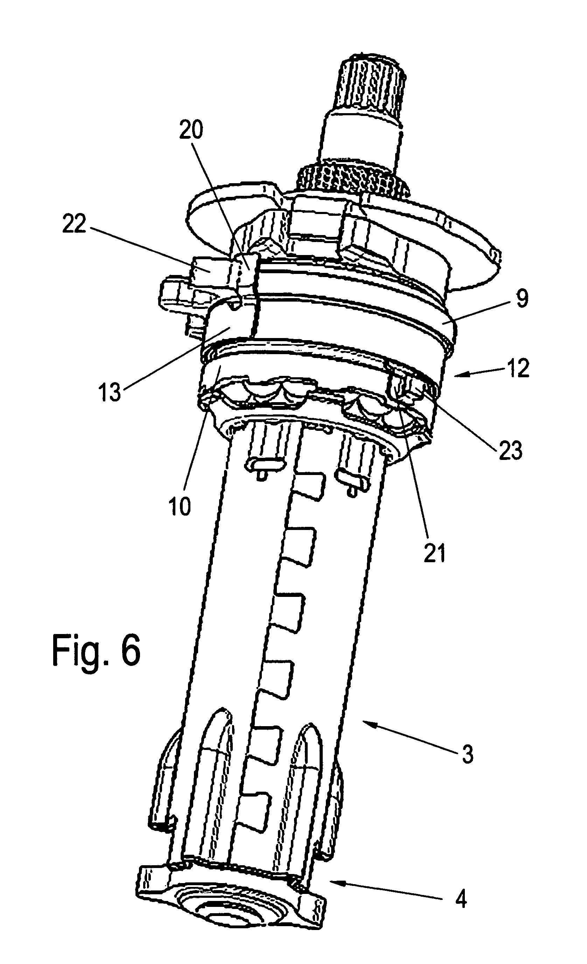

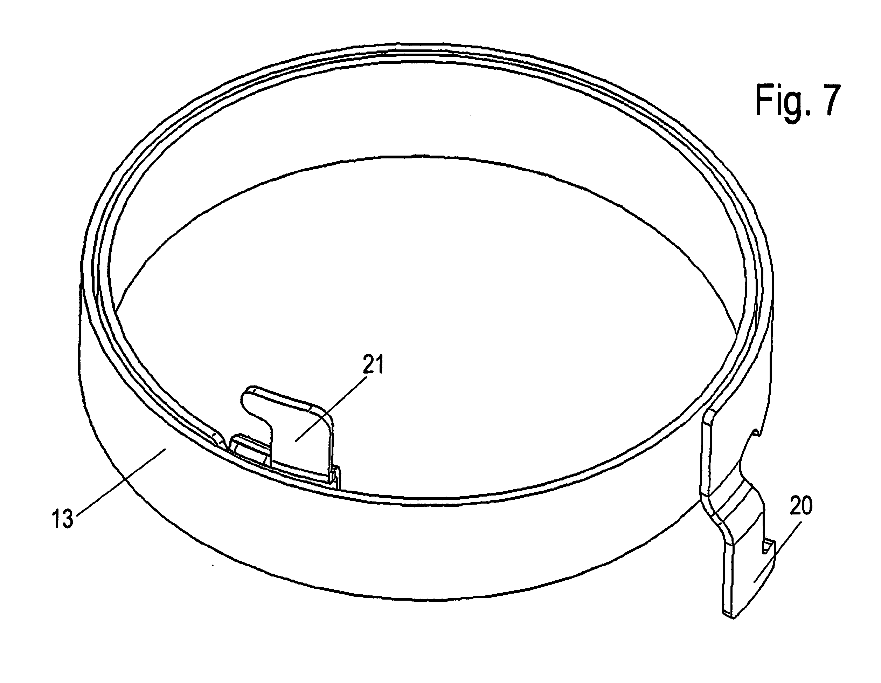

Ein weiteres Ausführungsbeispiel der Spiralfeder 13 ist in den Figuren 6 und 7 dargestellt.

Hierbei ist das Ende der äußeren Windung der Spiralfeder 13 als axial vorstehender Haken 20 ausgebildet, der, wie in der Figur 6 sehr deutlich zu erkennen ist, an einem radial vorstehenden Vorsprung 22 der Abtriebsscheibe 9 anliegt.

Die innen liegende Windung der Spiralfeder 13 ist in ihrem Endbereich gleichfalls als Haken 21 gestaltet, der sich entgegengesetzt des Hakens 20 axial erstreckt und an einem radial vorstehenden Zapfen 23 des Kupplungsringes 10 anliegt, wobei die Anlage so erfolgt, dass die Spiralfeder 13 bei einem gegensinnigen Verdrehen des Kupplungsringes 10 und der Abtriebsscheibe 9 gespannt wird.

### Bezugszeichenliste

- 1: Bremssattel
- 2: Bremshebel
- 3: Nachstelleinrichtung
- 4: Antriebseinrichtung
- 5: Stellspindel
- 6: Getrieberad
- 7: Antriebselement
- 8: Bremsbelag
- 8': Bremsscheibe
- 9: Abtriebsscheibe
- 10: Kupplungsring
- 11: Antriebsspindel
- 12: Kugelrampenkupplung
- 13: Spiralfeder
- 14: Ausnehmung
- 15: Schlitz
- 16: Nase
- 17: Druckfeder
- 18: Haken
- 19: Endbereich
- 20: Haken
- 21: Haken
- 22: Vorsprung
- 23: Zapfen

## Patentansprüche

1. Pneumatisch oder elektromechanisch betätigbare Scheibenbremse, insbesondere für ein Nutzfahrzeug, mit
a) einem eine Bremsscheibe übergreifenden Bremssattel (1),
b) einer im Bremssattel (1) angeordneten, einen Bremshebel (2) aufweisenden Zuspanneinrichtung zum Andrücken von Bremsbelägen (8) an die Bremsscheibe (8'),
c) zwei parallel und abständig zueinander angeordneten Stellspindeln (5), die mittels der Zuspanneinrichtung axial bewegbar sind,
d) einer im Bremssattel (1) positionierten, durch den Bremshebel (2) betätigbaren, ein zentrales Antriebselement (7) aufweisenden und zwischen den Stellspindeln (5) angeordneten und damit über ein Getriebe in Wirkverbindung stehenden Nachstelleinrichtung (3), mit der über eine axiale Verstellung der Stellspindeln (5) eine verschleißbedingte Änderung eines Lüftspiels zwischen dem Bremsbelag (8) und der Bremsscheibe (8') im Wesentlichen ausgleichbar ist,
e) wobei das Antriebselement (7) über eine Kugelrampenkupplung (12) an einer Antriebsspindel (10) angeschlossen ist und die Kugelrampenkupplung (12) eine in das Antriebselement (7) eingreifende Abtriebsscheibe (9) sowie einen Kupplungsring (10) aufweist, an denen jeweils ein Ende einer Drehfeder angeschlossen ist,
**dadurch gekennzeichnet, dass** die Drehfeder als Spiralfeder (13) ausgebildet ist.

2. Scheibenbremse nach Anspruch 1, **dadurch gekennzeichnet, dass** die Spiralfeder (13) aus einem gewundenen Federblech besteht.

3. Scheibenbremse nach Anspruch 1 oder 2, **dadurch gekennzeichnet, dass** die Spiralfeder (13) aus einem Federdraht besteht.

4. Scheibenbremse nach einem der vorhergehenden Ansprüche, **dadurch gekennzeichnet, dass** die Spiralfeder (13) formschlüssig in die Abtriebsscheibe (9) und den Kupplungsring (10) eingreift.

5. Scheibenbremse nach einem der vorhergehenden Ansprüche, **dadurch gekennzeichnet, dass** die Spiralfeder (13) an ihrer inneren Windung einen abgewinkelten, in eine radiale Ausnehmung (14) des Kupplungsringes (10) eingreifenden Endbereich (19) aufweist.

6. Scheibenbremse nach Anspruch 5, **dadurch gekennzeichnet, dass** der Endbereich der äußeren Windung der Spiralfeder (13) als Haken (18, 20) ausgebildet ist.

7. Scheibenbremse nach einem der Ansprüche 5 oder 6, **dadurch gekennzeichnet, dass** der Endbereich der inneren Windung der Spiralfeder (13) als Haken (21) ausgebildet ist.

8. Scheibenbremse nach Anspruch 7, **dadurch gekennzeichnet, dass** der Haken (21) der inneren Windung der Spiralfeder (13) und der Haken (20) der äußeren Windung gegensinnig axial verlaufen.

9. Scheibenbremse nach einem der Ansprüche 7 oder 8, **dadurch gekennzeichnet, dass** der Haken (21) der inneren Windung der Spiralfeder an einem radial verlaufenden Zapfen (23) des Kupplungsringes (10) und der Haken (20) der äußeren Windung der Spiralfeder an einem radialen Vorsprung (22) der Abtriebsscheibe (9) anliegen.

10. Scheibenbremse nach Anspruch 6, **dadurch gekennzeichnet, dass** die Abtriebsscheibe (9) mit einem Schlitz (15) versehen ist, an den sich eine Nase (16) anschließt, die von dem Haken (18) der äußeren Windung der Spiralfeder (13) nach dessen Durchführung durch den Schlitz (15) hintergriffen ist.

11. Scheibenbremse nach einem der vorhergehenden Ansprüche, **dadurch gekennzeichnet, dass** die Breite der aus einem Federblech gebildeten Spiralfeder (13) größer ist als ein zwischen der Abtriebsscheibe (9) und dem Kupplungsring (10) gebildete Spalt in einer maximalen axialen Spreizstellung.

12. Scheibenbremse nach einem der vorhergehenden Ansprüche, **dadurch gekennzeichnet, dass** der Kupplungsring (10) zumindest im Überdeckungsbereich mit der Spiralfeder (13) in die Abtriebsscheibe (9) eingetaucht ist.

## Claims

1. A pneumatically or electromechanically actuable disc brake, in particular for a utility vehicle, having
a) a brake caliper (1) which engages over a brake disc,
b) a brake application device, which is arranged in the brake caliper (1) and which has a brake lever (2), for pressing brake pads (8) against the brake disc (8'),
c) two control spindles (5) which are arranged parallel to and spaced apart from one another and which can be moved axially by means of the brake application device,
d) an adjusting device (3) which is positioned in the brake caliper (1), can be actuated by the brake lever (2), has a central drive input element (7) and is arranged between the control spindles (5) and is operatively connected to said control spindles via a gearing, with which adjusting device a wearinduced change in an air gap between the brake pad (8) and the brake disc (8') can be substantially compensated by means of an axial displacement of the control spindles (5),
e) wherein the drive input element (7) is connected to a drive input spindle (10) via a ball ramp coupling (12) and the ball ramp coupling (12) has a drive output disc (9), which engages into the drive input element (7), and a coupling ring (10) to which in each case one end of a torsion spring is connected, **characterised in that** the torsion spring is formed as a spiral spring (13).

2. The disc brake as claimed in claim 1, **characterised in that** the spiral spring (13) is composed of a wound spring plate.

3. The disc brake as claimed in claim 1 or 2, **characterised in that** the spiral spring (13) is composed of a spring wire.

4. The disc brake as claimed in one of the preceding claims, **characterised in that** the spiral spring (13) engages in a positively locking manner into the drive output disc (9) and the coupling ring (10).

5. The disc brake as claimed in one of the preceding claims, **characterised in that** the spiral spring (13) has, on its inner winding, an angled end region (19) which engages into a radial recess (14) of the coupling ring (10).

6. The disc brake as claimed in claim 5, **characterised in that** the end region of the outer winding of the spiral spring (13) is formed as a hook (18, 20).

7. The disc brake as claimed in one of the claims 5 or 6, **characterised in that** the end region of the inner winding of the spiral spring (13) is formed as a hook (21).

8. The disc brake as claimed in claim 7, **characterised in that** the hook (21) of the inner winding of the spiral spring (13) and the hook (20) of the outer winding run axially in opposite directions.

9. The disc brake as claimed in one of the claims 7 or 8, **characterised in that** the hook (21) of the inner winding of the spiral spring bears against a radially running peg (23) of the coupling ring (10) and the hook (20) of the outer winding of the spiral spring bears against a radial projection (22) of the drive output disc (9).

10. The disc brake as claimed in claim 6, **characterised in that** the drive output disc (9) is provided with a slot (15) which is adjoined by a lug (16), behind which lug the hook (18) of the outer winding of the spiral spring (13) engages after said hook has been passed through the slot (15).

11. The disc brake as claimed in one of the preceding claims, **characterised in that** the width of the spiral spring (13) formed from a spring plate is greater than a gap formed between the drive output disc (9) and the coupling ring (10) in a position of maximum axial spread.

12. The disc brake as claimed in one of the preceding claims, **characterised in that** the coupling ring (10) is recessed into the drive output disc (9) at least in the region of overlap with the spiral spring (13).

## Revendications

1. Frein à disque à commande pneumatique ou électromécanique, en particulier pour un véhicule utilitaire, comprenant
(a) un étrier de frein (1) chevauchant un disque de frein,
(b) un dispositif de serrage (5) disposé dans ledit étrier de frein (1) et comprenant un levier de frein (2) pour presser des garnitures de frein (8) au disque de frein (8'),
(c) deux broches de réglage disposées en parallèle et à un écart l'une de l'autre qui sont aptes à se mouvoir en sens axial moyennant ledit dispositif de serrage,
(d) un dispositif de rattrapage (3) positionné dans ledit étrier de frein (1), à commande moyennant ledit levier de frein (2), comprenant un élément central d'entraînement (7) et se trouvant ainsi en liaison fonctionnelle via une transmission, moyennant duquel une variation du jeu de ventilation, qui est due à l'usure, entre ladite garniture de frein (8) et ledit disque de frein (8), peut être compensée essentiellement par voie de l'ajustage axial desdites broches de réglage
(e) dans lequel ledit élément d'entraînement est raccordé via un coupleur à rampe de bille à une broche d'entraînement et ledit coupleur à rampe de bille (12) comprend un disque de sortie (9), qui se trouve en prise dans ledit élément d'entraînement (7), ainsi qu'une bague d'embrayage (10), auxquels est raccordé un extrémité respectif d'un ressort de torsion, **caractérisé en ce que** ledit ressort de torsion est configuré sous forme d'un ressort hélicoïdal (13).

2. Frein à disque selon la revendication 1, **caractérisé en ce que** ledit ressort hélicoïdal (13) consiste en une tôle élastique à effet de ressort.

3. Frein à disque selon la revendication 1 or 2, **caractérisé en ce que** ledit ressort hélicoïdal (13) consiste en un fil métallique à effet ressort.

4. Frein à disque selon une quelconque des revendications précédentes, **caractérisé en ce que** ledit ressort hélicoïdal (13) engage ledit disque de sortie (9) et ladite bague d'embrayage (10) de façon positive.

5. Frein à disque selon une quelconque des revendications précédentes, **caractérisé en ce que** ledit ressort hélicoïdal (13) présente une zone terminale (19) pliée, qui se trouve en prise dans un évidement radial (14) de ladite bague d'embrayage (10), à son tour intérieur.

6. Frein à disque selon la revendication 5, **caractérisé en ce que** ladite zone terminale du tour extérieur dudit ressort hélicoïdal (13) est configurée sous forme d'un crochet (18, 20).

7. Frein à disque selon une quelconque des revendications 5 ou 6, **caractérisé en ce que** ladite zone terminale du tour intérieur dudit ressort hélicoïdal (13) est configurée sous forme d'un crochet (21).

8. Frein à disque selon la revendication 7, **caractérisé en ce que** ledit crochet (21) du tour intérieur dudit ressort hélicoïdal (13) et ledit crochet (20) du tour extérieur s'étendent dans des sens réciproquement opposés en direction le long de l'étendue axiale.

9. Frein à disque selon une quelconque des revendications 7 ou 8, **caractérisé en ce que** ledit crochet du tour intérieur dudit ressort hélicoïdal (13) porte contre un tenon (23) à étendue radiale de ladite bague d'embrayage (10) et ledit crochet (20) du tour extérieur dudit ressort hélicoïdal (13) porte contre une saillie radiale (22) dudit disque de sortie (9).

10. Frein à disque selon la revendication 6, **caractérisé en ce que** ledit disque de sortie (9) est muni d'une fente (15), à laquelle se joigne un talon (16), derrière duquel s'engage ledit crochet (18) du tour extérieur dudit ressort hélicoïdal (13) après son passage par ladite fente (15).

11. Frein à disque selon une quelconque des revendications précédentes, **caractérisé en ce que** la largeur dudit ressort hélicoïdal (13) formé en une tôle élastique à effet de ressort est plus grande qu'une fente formée entre ledit disque de sortie (9) et ladite bague d'embrayage (10) en une position écartée axiale maximale.

12. Frein à disque selon une quelconque des revendications précédentes, **caractérisé en ce que** ladite bague d'embrayage (10) est insérée dans ledit disque de sortie (9) au moins dans la zone de chevauchement avec ledit ressort hélicoïdal (13).
